# EUROPEAN PATENT SPECIFICATION

(11) **EP 0 842 584 B1**
(45) Date of publication and mention of the grant of the patent: **02.11.2000**
(21) Application number: 95930439.5
(22) Date of filing: 04.08.1995
(51) Int. Cl.: H04N 7/173

(54) **AN INTERACTIVE COMMUNICATIONS SYSTEM**
INTERAKTIVES NACHRICHTENSYSTEM
SYSTEME DE COMMUNICATIONS INTERACTIF

(43) Date of publication of application: 20.05.1998
(60) Divisional application: 99123957.5
(73) Proprietor: Tresor TV Produktions GmbH, 85774 Unterföhring (DE)
(72) Inventor: WILHELM, Siegfried, E., D-81373 München (DE); ROOST, Holger, D-85737 Ismaning (DE)
(74) Representative: Schmidt, Steffen J., Dipl.-Ing.
(86) International application number: EP9503115
(87) International publication number: WO9706640

(56) References cited:
- EP-A- 0 535 572
- EP-A- 0 595 354
- EP-A- 0 624 039
- WO-A-91/06160
- WO-A-94/23537
- WO-A-95/15657
- US-A- 4 761 684
- CABLE TV SESSIONS, MONTREUX, JUNE 10 - 15, 1993, no. SYMP. 18, 11 June 1993 POSTES;TELEPHONES ET TELEGRAPHES SUISSES, pages 555-567, XP 000379380 HOARTY W L 'MULTIMEDIA ON CABLE TELEVISION SYSTEMS'

## Description

The invention relates to an interactive communications system for home use via telephone lines according to claim 1 and a method for interactive communicating according to claim 25.

Demand for interactive communications and multimedia products is rapidly increasing. A major factor in the slow growth of multimedia products is that a broadband technique infrastructure providing high volume data transfer is not in place. It will be years before a wireless network or a network of fiber optics or coaxial cables are in place, so service providers must wait for high transmission services such as 'video on demand'. A worldwide data communications network does exist which provides slow transmission rates. Slow transmission rate interactive communications can take place on this network and so slower multimedia services can be implemented before the infrastructure of the high volume transmission network is finished.

Analyzing the different fields of interactive television, the main online service does not indicate that 'video on demand' will be the most popular service, rather it will be services such as "tele_games, tele_shopping, tele_learning" etc.

In WO 95/15657 a system for "video on demand" services is disclosed. Using a set top box control data are transmitted to an operation center which in response transmits a program requested by an end user. The purpose of this system is to provide programs individually selected by each user. In order to handle the bottle necks of data communication networks due to low transmission rates and limited band width the operation center controls the transmission (e.g. timing, data format) of each program requested by a specific user. Therefore, only users of a respective set top box will have access to programs provided by this system and will be allowed to watch only the specific program they have chosen. Television sets being not connected to a set top box will not receive any program provided by this system. Therefore, a special infra-structure comprising communication links between the operation center and set top boxes is required in order to provide the system with all information necessary to optimally fulfill the demands of all users. As a result, the flexibility and expansion of this system is restricted and a satisfying service by such a system at a reasonable price for a large number of users can not be achieved.

A system for a "tele_game" service is described in WO 91/06160. This system includes a home computing device which communicates with a host via a telephone network and receives programs provided by the host via a television broadcast system. For controlling an actual provided program, data is exchanged between a home computing device and the host and/or between different end users of the system via the host, while the transmission of the actual program is performed by the television broadcast system. Since the objective of this system is to provide an interactive tele-game only those television sets will receive programs provided by the host which are used in combination with a home computing device. Furthermore, for receiving a program provided by the system it is necessary to maintain a permanent data communication between a home computing device and the host.

According to EP-A-0 595 354 individual billing for viewing and/or accessing programs transmitted via a broadcast station is performed by using set top boxes which receive the transmitted programs and transmit information indicating the reception of the program to billing host system. Again, the reception of a transmitted program is possible only if a set top box is used for receiving the program.

US-A-4,761,684 discloses a system in which one user can control a program transmitted by a host computer to all subscribers of the system via one common channel whereby the controlling user generates and communicates respective data to the host computer by a telephone apparatus. This system permits a user to control the transmitted program.

In EP-A-0 535 572 a system is described in which a user can request data/information from a host computer by transmitting respective data via an interactive terminal to the host computer which in turn transmits requested data/information via a broadcast station to a TV-set of the user. The requested data/information are embedded into a TV-signal received by the TV-set. The TV-signal is transmitted to the interactive terminal via the TV-set and the interactive terminal extracts the requested data/information from the TV-signal for further processing. Requested data/information can not be displayed or processed by a TV-set such that only the requesting user can access the requested data/information by using his/her an interactive terminal. An interactive control of transmitted data/information by a plurality of users is not described.

It is an object of the present invention to provide an interactive communication using existing data networks and especially telephone networks for providing interactive television services. Preferable, the inventive communication should operate even with communication networks having low data transmission rates.

A further object of the invention is to provide an interactive communication which allows an user to have access to television services without being interactively controlling the television services.

Additionally, the invention should enable an user to initiate, maintain and terminate an interactive communication for controlling a television service at any desired time during the transmission of the television service.

A further object of the invention is to provide an interactive communication which can be easily adapted in order to be used for many different interactive television services.

These objectives of the invention have been achieved by an interactive communications system according to claim 1 and a method for interactive communications according to claim 25.

With the invention, two different communications links are active. First, the bidirectional transfer from an end user device to a host computer uses the public telephone network, with the host computer handling all incoming and outgoing analog/digital data. Second, the host computer is connected to a television broadcast station which transmits a television program to the end user's televison set.

The end user device is able to establish communications with the host computer to take advantage of the services being provided. It is possible to coordinate bidirectional data transfer from the host computer to an end user device and to a specific television program and/or service. Entering data on the end user device could have numerous effects on the host computer which in turn could effect the status of the specific television program. This could be something as simple as moving an object or as complex as altering the plot of a story. The system could also be connected to either the end user's bank account or to a billing service. For a small charge, an end user could compete against other end users in something like a trivia show, where the winner(s) receives a certain amount winning price. An end user could also purchase items during a commercial break via the end user device. These are just a few examples of the services that can be provided with this interactive communications system. Instead of a television program having a certain plot, distributing information or containing advertisment, the program transmitted by said television broadcast station can be a dedicated program containing a telephone directory, address directory, business information like exchange rates, company data, economical data, of local information on cultural or social events, environmental information, employment information, sports news, wheather forecast, sales of tickets for cinemas, theaters, trains, buses. The aforementioned and many more activities are made available through the present invention on a very cost effective and easy to use basis.

These interactive communication services can be provided with relatively low data transmission rates to/from the end user's device. These data transmission rates can be further reduced by the implementation of compression software. Under these conditions, a potential market is immediately available. All of this can be accomplished with relatively low cost to both the consumer and the provider.

There are some important factors for success in low transmission rate interactive television communication that the invention fulfills. They include: a moderate price of the end user's equipment, multiple programmable utilization of the end user's equipment, the service provider has to start with a complete software service, the service provider has to offer multiple services, the service provider has to offer interesting programs, and the service provider must begin with a large customer base.

Further advantages, features and details will become appearent to those skilled in the art from the following description of everal embodiments of the present invention which refers to the enclosed drawings, in which:
Fig. 1 is a block diagram of the interactive communications systems;
Fig. 2 is an embodiment of an end user device;
Fig. 3 is an illustration of the end user's device telephone device;
Fig. 4 and 5 are block diagrams of the embodiment of the end user device;
Fig. 6 is a second embodiment of an end user device; and
Fig. 7 is a block diagram of the connection between the host computer and the end user devices;

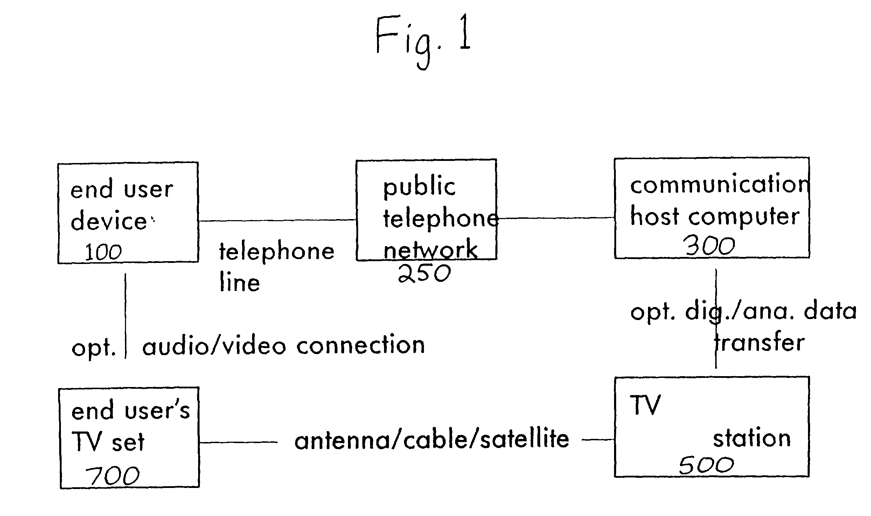

The present invention illustrated in Fig. 1 comprises at least one end user device (100) arranged for communicating data with a host computer (300), a communication means (250) between said host computer (300) and said at least one end user device (100), a television broadcast station transmitting (500) a television program at least partially controlled by said host computer (300) and at least one television set (700) arranged for receiving said television program transmitted by said television broadcast station (500). Data received by the host computer (300) from the end user device (100) is taken into account by a software program in said host computer (300) controlling output action from said host computer (300).

Two communications situations are possible between the host computer (300) and an end user device (100). It is possible for the end user device (100) to only be able to transmit data to the host computer (300). And it is possible that end user device (100) has both data transmitting means and means for receiving text, graphics, video and audio data or programs from the host computer (300).

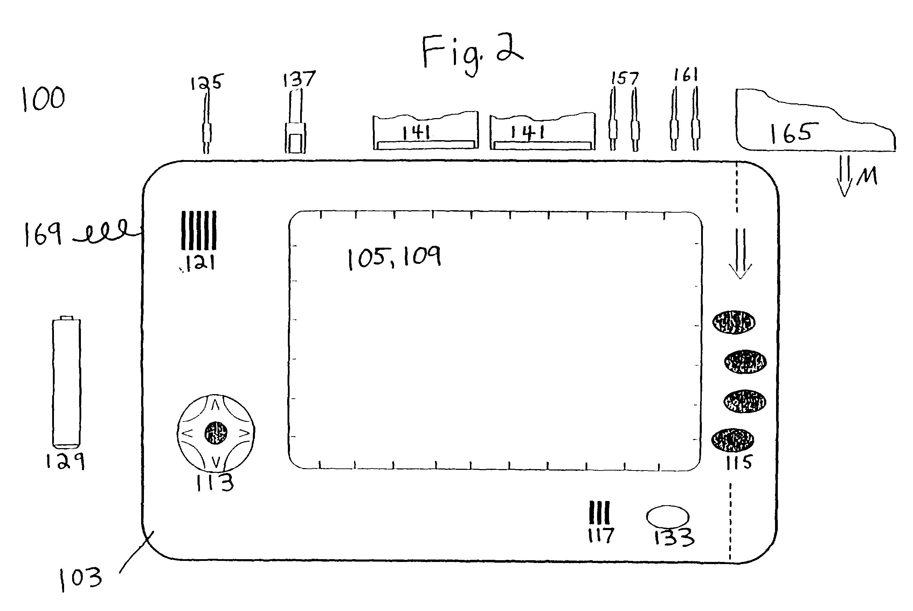

A preferred embodiment of the invention has an end user device (100) with bidirectional communication means (200). Referring to Fig. 2, the end user device (100) has a user interface including data output means to output text, graphics, video and audio data to an end user. The components of the end user device (100) are located in a housing (103). The end user device housing (103) contains a transparent tablet (105) for data entry means. The transparent tablet (105) is an xy-tablet with a tactile sensitive pad. All data received by the transparent tablet (105) is entered by the end user's finger tips or with an appropriate pen. The area of the transparent tablet (105) is divided by coded rows and columns, as well as xy-area for point coordinates. The transparent tablet (105) can therefore be used as a general purpose input device, e.g. as a pushbutton field or as a mouse pad. The xy-tablet can be an optical or resistor type device with low accuracy and resolution. Behind the transparent tablet (105) is a graphics display (109), preferably, but not necessarily, covering the entire surface area of the transparent tablet (105). The graphics display (109) is an alpha-numeric/graphic LCD display or a plasma display. This data display (109) operates as the visual output interface of the end user device (100) for any internal or received information. The graphics display (109) should be as large as possible.

A secondary data entry means is the cross switch (113). This cross switch (113) is mounted in the housing (103) separately from the transparent tablet (105). The cross switch (113) can be equipped to supply directional and/or xy-coordinates data. The cross switch (113) may consist of a joystick, a tractor ball, a touch sensitive pad etc. The end user device (100) is also equipped with a plurality of function buttons (115). These buttons may be used for data functions such as graphics display (109) manipulation, 'function select', 'telephone <> modem', 'enter', 'send', etc.. Volume may be controlled with the function buttons (115) or it may be controlled by a knob on the side of the housing (103) (not shown). All functions may also be controlled and/or programmed by software.

Audio data can be recorded directly by the end user device (100) by means of a microphone (117) built into the housing (103). The end user device (100) can reproduce audio data by means of a speaker (121). The end user device (100) may be powered by means of an external power port (125) or a battery (129). A power switch (133) controls the powered state of the end user device (100).

The end user device (100) is connected to the public telephone communications network (250) at a telephone line port (137). The public telephone communications network (250) may be a analog or digital (e.g. ISDN) network. The telephone line is the only means of data transfer between the end user device (100) and the host computer (300).

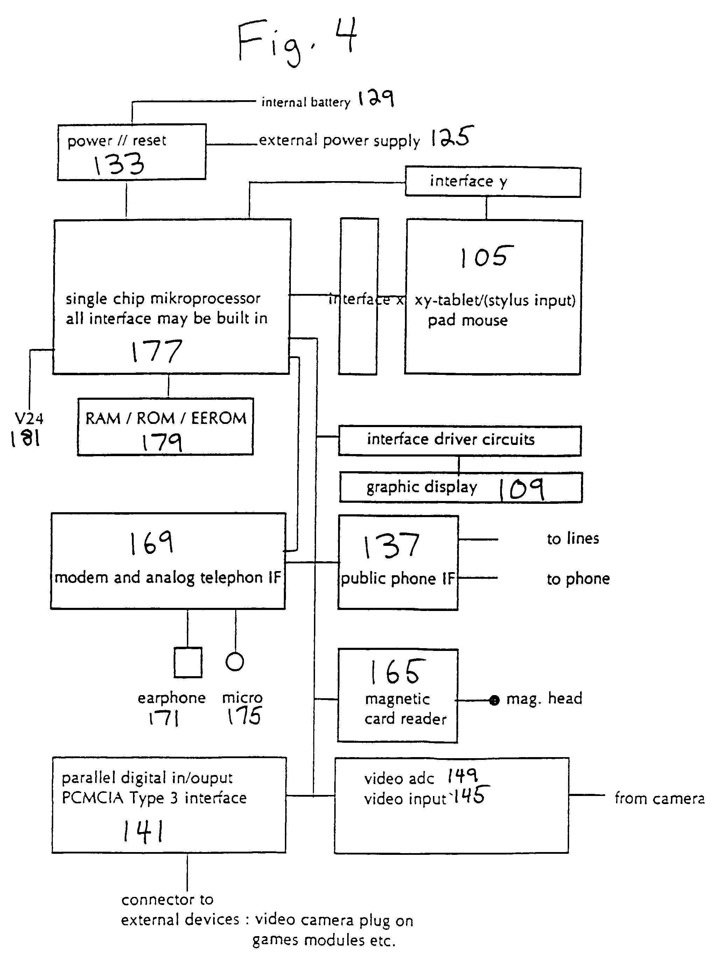

At least one or more input ports (141) are adapted to send and receive data to and from a peripheral device other than the host computer (300). It is possible for this input port (141) to be connected to the end user's televison set (700) to receive television status information. The input port (141) could also be connected to numerous other external devices such as a video camera, game modules, etc. The end user device (100) is also equipped with a dedicated video input port (see Fig. 4, 145).

Connected to the video input port (145) is a video analog-to-digital converter (see Fig 4., 149). The video input port (145) and the video analog-to-digital converter (149) is designed to transmit video data directly to the host computer (300) through an external source or a snap on module which carries a charge coupled device. There is the possibility to put the entire control hard/software of the external devices into such external devices with a minimum driver capability residing in the end user device (100). This has the advantage of a relatively simple and cost effective design of the end user device (100) giving the broadest flexibility for the design and functionality of the external devices. The other possibility is the control of the external devices by hard/ software entirely residing in the end user device (100). This concept allows for a simple and cost effective design of the external devices.

Additional outputs for audio and video data are the audio ouptut port (157) and the video output port (161). These output ports may be used to replace the sound output of the internal speaker (121) and the video output of the graphics display (109) or they may be used for a secondary output differing from that of the graphics display (109) and the internal speaker (121). A TV modulator can be installed making the end user device (100) able to display graphics on a monitor (for video games or still pictures etc.) through the video output port (161).

The end user device also comprises an identification means (165). This may be either a magnetic strip card reader or a microchip card reader. It is preferably located on a face of the housing (103) perpendicular to the transparent tablet (105). The magnetic strip card or the microchip card is swiped through the identification means in the direction of the arrow M. After the code specific to the magnetic strip card or microchip is read, the predefined unique identification of the end user is established. Subsequently, this information is later transmitted to the host computer (300). It is also possible that the identification means (165) consists of a microchip housed internally in the end user device (100). Then the predefined unique identification number would indicate a specific end user device (100) rather than a specific end user. A further step of the user entering in a PIN code could be implemented to increase security. This unique identification of the user is processed in the host computer (300) to allow the user access to the software in the host computer (300), to allow the user to cause actions in the host computer (300), to charge the user's account, etc.

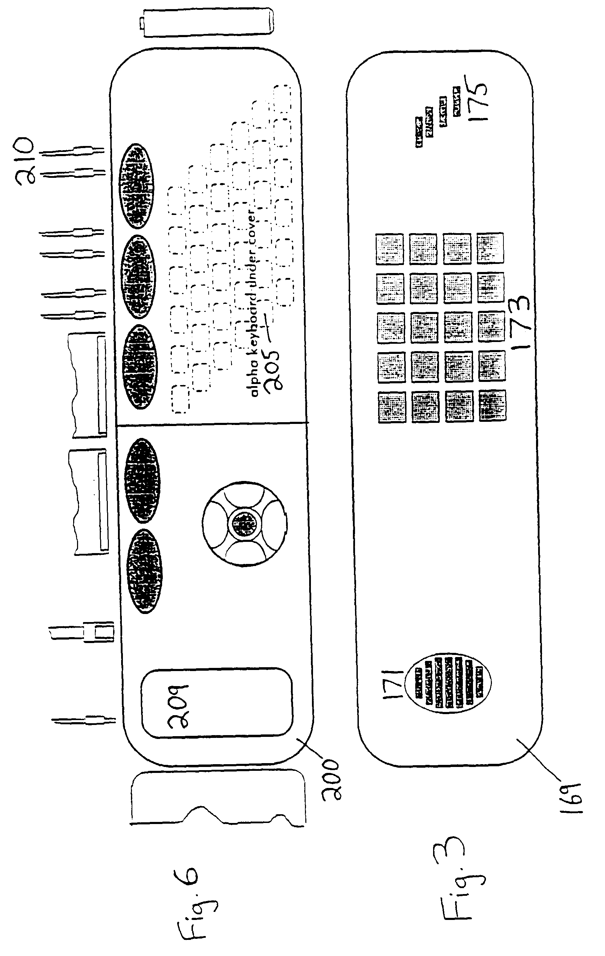

Figure 3 shows an analog telephone (169) which is attached to the end user device (100). The analog telephone (169) comprises an earphone (171) for receiving audio information, a telephone keyboard (173) for numerically entering telephone numbers and other information, and a microphone (175) for transmitting audio information. A disconnect button (not shown) can be placed on the phone or on a cradle to hold the phone in its inoperative state. This analog telephone operates independently of the other portions of the end user device (100), but can not be simultaneously used when a connection between the end user device (100) and the host computer (300) exists. The telephone (169) has the standard functions of a state of the art telephone. In an advanced embodiment, the analog telephone may also be a digital telephone (e.g. ISDN) connectable to a digital telephone network.

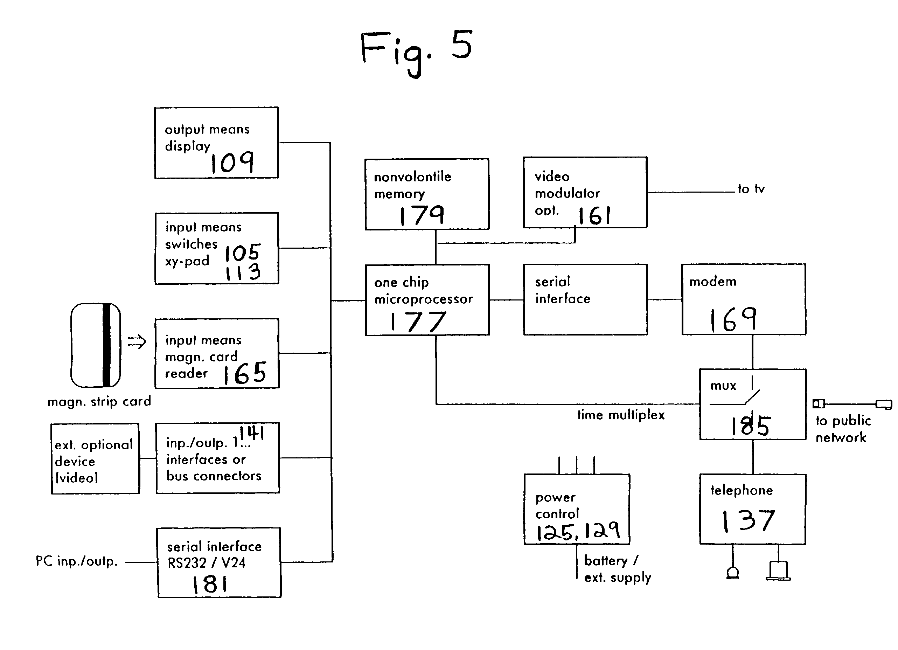

Figures 4 and 5 show block diagrams of the end user device (100). Features previously mentioned have retained their reference numbers. The end user device (100) is controlled by one or more single chip microprocessors (177). End user device (100) applications can be either stored in read only memory or is software downloaded from the host computer. Another possibility is the use of a FLASH-memory which is fed by the host computer with the respective software program to control the operation of the end user device (100). Data entered on the end user device (100) and data received from a peripheral can be stored in RAM memory housed in the memory space (179). The memory space (179) also contains read only memory which contains the operating system software. The operating system software comprises a kernel monitor which initializes the peripherals and tests all of the hardware and software for communications with the host computer.

The software also serves the following functions: power on restart function, it contains built in drivers for all hardware parts (i.e. tablet, display, adc, digital I/O, modem, analog phone, magnetic card reader), test routines for the hardware and contains a standard modem package. The test routines for the hardware includes testing of the MPU, RAM, EEPROM, display, tablet, video, card reader, analog phone etc.

The software has different modes including: power on restart, parameter set up, telephone mode, alpha / xy-data transfer mode, video data transfer mode, remote control mode, down load mode, up load mode, load play mode, and set/reset play mode. The software is capable of real time mode switching at: alphanumeric input / output, dialing, answering, xy-data transfer mode with external mode switching, analog telephone mode with external mode switching, external video transmission, and parallel digital I/O interface for optional plug on devices. The read only memory may also contain a software program for compressing and decompressing data for more efficient data transfer.

A standard V24/RS232C serial in/out interface (181) connects the microprocessor (177) to the host computer via a modem (169) internally or externally located. The modem (169) may provide the full range of functions of a normal Hayes modem. Alternatively, the functionality may also be restricted or expanded vis-à-vis a Hayes modem. A multiplexer (185) toggles the end user device (100) between a telphone mode and a mode for communicating with the host computer (300). The multiplexer (185) can be switched manually or it can be done by remote control from the host computer (300). The end user device (100) will function as a telephone (169) when not in communication with the host computer (300) and so the multiplexer (185) will connect the telephone (169) to the public telephone network (250). Depending on the technology the telephone network employs, other solutions than the multiplexer may be neccessary to realize this function.

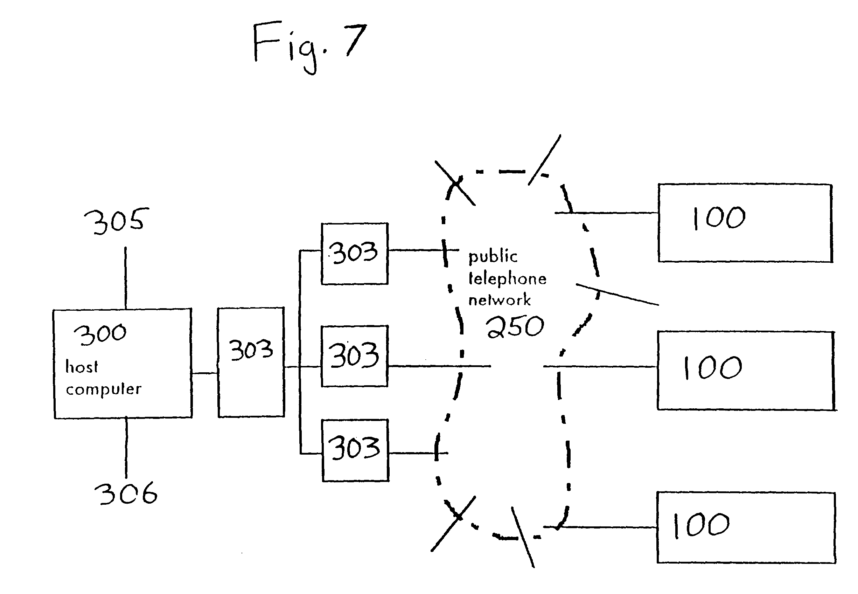

A second embodiment of the end user device (200) is pictured in Figure 6. This has the same internal features and external features as the end user device housing (103) except that it has an alpha numeric keyboard (205) in place of the transparent tablet (105), the graphics display (209) is located away from the keyboard (205), and there is a second video output (210). The graphics display (209) may also be replaced with the graphics being displayed upon a television screen via the second video output (210). It is possible that the graphics displayed on the television screen are partially translucent and can be seen simultaneously with normal television broadcasts. Having the graphics displayed upon a television screen rather than a built in display can allow for a smaller, less expensive overall package of the end user device (200). Instead of the tactile input means (push buttons, xy-tablet etc.) a natural voice input recognition may be employed. This would allow for a much easier control of the end user device (100) and would also simplify the physical input means.

The host computer (300) is connected to the end user devices (100) by means of the public telephone network (250) with bidirectional communication between the two devices. This public telephone network (250) may be a wireless cellular network or a standard fixed wire telephone network. Figure 7 shows an intermediary between the public telephone network (250) and the host computer (300), the data communication handling equipment (303). The communication handling equipment (303) routes and handles all incoming and outgoing calls and data transfer. The total number of simultaneous end user's and thus telephone links could be on the order of at least 10,000 or more units with each end user device (100) receiving a distinct transmission, so the handling equipment needs to be exact and expedient.

The end user device (100) by means of its modem, "calls" via the public telephone network (250) and the communication handling equipment (303), a modem housed in and connected to the host computer (300). Through normal Hayes modem protocol, communication is established between the host computer (300) and the end user device (100). The preferred baud rate is at least 2400 bits/sec but may also be more depending on the quality of the network. Since the telephone network is not always free of noise and disturbance, error correction methods are required. Error correction is timely and so the slow transmission rate has been established. The data is transmitted by XMODEM, YMODEM, ZMODEM, and MNP5-Protocol of the like with a fast cyclic redundancy check algorithm and with error correction. The high level protocol calls for data framing with variable block length. This is done by sending a data frame with a begin code, an address, the identification code of the user, and an end code. Text, graphics, video and audio data can all be sent to the end user devices (100).

The host computer (300) has bidirectional connections to a television studio computer (306) and an external network (305). The studio computer (306) controls the television broadcast. Any changes in a television program are done by the studio computer (306) and can be prompted by an action from the host computer (300).

The connection to the external network (305) allows the host computer (300) to access such things as a user's bank account, an outside billing agency, or any other outside agency or computer for that matter. Assuming that an end user is, on an end user device (100) which is receiving data corresponding to a broadcast from the interactive communications system's televison station (500) on a specific television channel and watching said broadcast on the end user's television set (700), and during a commercial break the end user sees an item he or she would like to purchase, then he or she would simply indicate that on the end user device (100). The host computer (300) would then connect to the bank account corresponding to the identification number of the active end user and check if there is sufficient money to make the desired purchase. If there is sufficient money in the bank account, the specified amount of money is withdrawn and is electronically transferred to the vendor selling the desired product's bank account. Along with the money transfer, the personal information (address, phone number) from the end user's account can be sent to the vendor. The bank account could also be accessed as a means of billing for services rendered by the host computer (300). Since the access of bank accounts is a sensitive matter, a PIN code in addition to the code from the identification means may be required to further ensure the identity of the end user. Instead of accessing the end user's bank account, his/her credit card or his virtual money account or card ("Cyber bucks") could be debited.

Another feature of the host computer (300) is that it can configure the network of end user devices (100) into several modes: a single user controlling a television program, multiplexed users controlling a television program, multiple users to the host computer (300) and/or multiple users etc. So the host computer (300) by means of a software program, may at least partially control a television broadcast as the result of the data output of at least one or more end users. As a result, interactive televison programs catering to a plurality of end users is desirable. Since the host computer (300) can receive data simultaneously from a plurality of end user devices (100), large scale interactive competitive and cooperative programs can be implemented.

End users could compete against one another in such a program as a trivia game. Each contestant can be knowingly charged a certain amount of money to participate in the contest with the winner receiving a large amount of money automatically credited to his or her account. The trivia game software for the end user device (100) can be downlaoded to the end user device (100) upon the optional successful transfer of money from the end user's connected bank account. The television broadcast will display on the end user's television set (700) trivia questions in the form of multiple choice answers. Activation areas corresponding to the selection of a certain answer appear on the graphics display (109) of the end user device (100). The individual who replies the quickest and with the correct answer on his or her end user device (100) gets the most points. This process repeats for a while with some variations and at the end, the end user with the most points wins the cash prize credited to his or her bank account.

Another program could be an interactive dating service. An end user inidicates that he or she would like to participate in the dating program, so his or her account is charged and the dating program software is then downloaded to his or her end user device (100). Individual end users enter their vital statistics on the end user device (100) which are then transmitted to the host computer (300) which sends them to the television broadcast station (500) via the studio computer (306) where they are transmitted to the end user's television sets (700). An end user interested in a second end user could send a message to the second end user by means of the host computer (300). Direct end user to end user communication by means of the host computer (300) can be made when both parties agree to communicate.

The host computer (300) will also have a portion of hard disk memory for each end user to access and store info rmation. This could be used for billing records or it could be used to store accumulated electronic mail etc.

A normal activation of the interactive communications system would begin with the kernel monitor's initialization of the end user device (100) after being supplied with power. This involves the end user establishing his or her identification (i.e. by swiping a magnetic card or a microchip card through the identification means (165). Unless told otherwise the end user device (100) will attempt to establish communications with the host computer (300). Upon establishment of communcations, the host computer (300) will download a software program (which may be specific to the end user's identification code) to the end user device (100) where it is stored in the end user device's read/write memory (179). This may be a menu giving the end user options, or it may be a software program corresponding to the present television broadcast. Any data entered in the end user device (100) is processed by the end user device (100). It is possible that the software program downloaded to the end user device (100), or any software program for that matter, does not require further communications with the host computer (300), so the connection between the end user device (100) and the host computer (300) can be terminated without losing the full functionality of the software program. More likely, the initial software program is a menu listing other software programs that are available to be downloaded to the end user device (100). This menu could be specific to the end user currently using the end user device (100). The end user may then select a new software program to be downloaded to the end user device (100) where it is intended for the end user device (100) to behave like a terminal with the host computer (300) in remote control. The new software program is also stored in the read/write memory of the end user device (100) either stored in free memory or at least partially overwriting other software programs stored in the read/ write memory. A software program downloaded for a trivia game, may have five software buttons on the graphics display (109) coordinating to the answers given on the screen. All the end user must do is press the tranparent tablet (105) to the location where the buttons are located. Another software program may have arrows instead of buttons, text, graphics, etc. Data sent to the host computer (300) from the end user device (100) is processed by the host computer (300) which has a software program to determine if the data sent from the end user device (100) will at least partially control the television broadcast (by means of sending data to the studio computer (306)). Any required billing is done automatically since the end user's identity has been established by the identification means (165). Quitting may be done at any time and results in disconnecting the link between the end user device (100) and the host computer (300).

The individual components of the system are not limited to use with the interactive communications system as claimed. The end user device (100) may be programmed to work independently of a host computer or may be programmed to work with a different system. The host computer (300) may be programmed to data input means other than said end user device (100).

## Claims

1. An interactive communications system comprising:
- a bi-directional data communication link (250) between a host computer (300) and at least one end user device (100),
- a television broadcast station (500) being in communication said host computer (300) for transmission of a television program at least partially controlled by said host computer (300),
- a software program in said host computer (300) for at least partially controlling said television broadcast program by control of data outputted by said host computer (300) at least partially controlled by data received from said end user device (100) such that said end user device (100) is at least partially controlling said television program,
- at least one television set (700) arranged for receiving and displaying said television program, and
- uni-directional communication links between said television broadcast station (500) and said at least one television set (700) for directly feeding said television program to said at least one television set (700),
characterized by
- a software program in said end user device (100) comprising a menu giving the end user options for control of the operation of the end user device (100) or a software program corresponding to the present television program being downloaded from said host computer (300) via said bi-directional data communication link (250).

2. The system as defined in claim 1,
characterized in that
said end user device (100) comprises at least one video analog to digital converter (149) and at least one video input port (145) which receives data from an external video camera.

3. The system as defined in claim 1 or 2,
characterized in that
said end user device (100) has a read only memory (179) comprising an operating system which is adapted to at least complete hardware and software tests and to initialize the end user device (100) for communications with said host computer (300).

4. The system as defined in one of the preceding claims,
characterized in that
said end user device (100) is provided with at least one input port (141) adapted to send and receive data to and from a peripheral device (141) other than said host computer (300).

5. The system as defined in one of the preceding claims,
characterized in that
said read only memory (179) further comprises a data compression/uncompression program for sending and receiving data from said peripheral device (141) and/or from said host computer (300).

6. The system as defined in one of the preceding claims,
characterized in that
said end user device (100) comprises a telephone means (169) for voice communications over said telephone line network (250).

7. The system as defined in one of the preceding claims,
characterized in that
said end user device (100) includes data receiving means for receiving text, graphics, video and audio data or programs from said host computer (300).

8. The system as defined in one of the preceding claims,
characterized in that
said end user device (100) has a user interface (103) including data output means to output text, graphics, video and audio data.

9. The system as defined in one of the preceding claims,
characterized in that
said user interface (103) comprises a data entry means for entering alphanumeric, graphical, xy-coordinates and/or directional data (105, 113, 115).

10. The system as defined in one of the preceding claims,
characterized in that
said end user device (100) has read/write memory space (179) to store data entered manually and/or received from a peripheral input (141).

11. The system as defined in one of the preceding claims,
characterized in that
said end user device (100) has read/write memory space (179) to store data and/or at least one software program received from said host computer (300).

12. The system as defined in one of the preceding claims,
characterized in that
said at least one input port (141) of the end user device is adapted to be connected with an end user's television set (700) to receive television status information.

13. The system as defined in one of the preceding claims,
characterized in that
said end user device (100) comprises at least one video output (161) and at least one audio output (157) for image and/or sound transmissions from said host computer (300).

14. The system as defined in one of the preceding claims,
characterized in that
said video output (161) is connected to the video input of said end user's television set (700) to display data received by said end user device (100).

15. The system as defined in one of the preceding claims,
characterized in that
said end user device (100) has an identification means (165) which transmits a unique identification code of a predefined end user to the host computer (300).

16. The system as defined in one of the preceding claims,
characterized in that
said identification means (165) comprises a magnetic strip card reader or a chip card reader.

17. The system as defined in one of the preceding claims,
characterized in that
said identification means (165) is a read only memory containing a unique identification code where the read only memory is housed in the end user device.

18. The system as defined in one of the preceding claims,
characterized in that
said means connecting said host computer (300) to the said user devices comprises modems housed in both the said end user device (100) and the said host computer (300) connected by a telephone line network (250).

19. The system as defined in one of the preceding claims,
characterized in that
said modems operate at a data transmission rate in the range of 2400 baud.

20. The system as defined in one of the preceding claims,
characterized in that
said host computer (300) has means for sending text, graphics, video and audio data to said end user device (100).

21. The system as defined in one of the preceding claims,
characterized in that
said host computer (300) is provided with data handling equipment (303) to simultaneously and separately communicate with a plurality of end user devices (100).

22. The system as defined in one of the preceding claims,
characterized in that
said host computer (300) is connected to an external network (305) allowing said host computer (300) to send and receive data to and from external nodes.

23. The system as defined in one of the preceding claims,
characterized in that
said host computer (300) has means to store information in its memory accessible from said end user device (100).

24. The system as defined in one of the preceding claims,
characterized in that
said host computer (300) has means to link at least two end user devices (100) together for communication purposes.

25. A method for interactive communications between an end user device (100) and a host computer (300) in the system of claim 1, the method comprising the following steps:
- said end user device (100) is initialized and communication between said end user device with said host computer (300) is attempted via a bi-directional data communication link (250),
- upon establishment of communication, a software program is executed in said end user device (100) to send data to the said host computer (300),
- data entered by an end user into said end user device (100) in response to the software program is processed by said end user device (100),
- output data of said end user device (100) is transmitted to said host computer (300),
- data received by said host computer (300) from said end user device (100) is taken into account by a software program in said host computer (300),
- said software program in said host computer (300) is controlling output action from said host computer (300),
- said software program in said host computer (300) is at least partially controlling a television broadcast program transmitted by said television broadcast station (500),
- said software program in said host computer (300) includes at least one software program to allow said at least one end user device (100) to at least partially control said television program transmitted by said television broadcast station (500), and
- said television program is directly transmitted to at least one television set (700) by said television broadcast station (500) via uni-directional communication links,
the method being characterized by
- downloading of a software program from the host computer (300) into the end user device (100) via said bi-directional data communication link (250) comprising a menu giving the end user options to control the operation of the end user device (100) or a software program corresponding to the present television program.

26. The method of claim 25, wherein
data from an external video camera are received from said end user device (100) via at least one video input port (145) and are processed by said end user device (100) to be transmitted to said host computer (300).

27. The method of claim 25 or 26 wherein
said downloaded software program is stored within read/write memory (179) within said end user device (100).

28. The method of one of the claims 25 to 27 wherein
said data transmission in response to said data entry will initiate a further software program to be downloaded to said end user device (100).

29. The method one of the claims 25 to 28 wherein
said downloaded further software program is stored within read/write memory (179) in empty space and/or overwriting previously downloaded software.

30. The method one of the claims 25 to 29 wherein
said downloaded software program is specified by an identification code sent by said end user device (100).

31. The method one of the claims 25 to 30 wherein
said identification code also may specify further software programs to be downloaded to said end user device (100).

32. The method one of the claims 25 to 31 wherein
said end user device has a communication protocol stored in read only memory (179) comprising a kernel monitor.

33. The method one of the claims 25 to 32 wherein
said downloaded software program responds to said entered data on the end user device (100) by transferring data to said host computer (300).

34. The method one of the claims 25 to 33 wherein
said host computer (300) sends data to said television broadcast station (500) in response to data received from said end user device (100).

35. The method one of the claims 25 to 34 wherein
the transmitted said program of said television broadcast station (500) is altered in response to the data received by said host computer (300).

## Patentansprüche

1. Ein interaktives Kommunikationssystem, mit:
- einer bi-direktionalen Datenkommunikationsverbindung (250) zwischen einem Host-Computer (300) und wenigstens einem Endbenutzergerät (100),
- einer Fernsehsendestation (500), die zur Übertragung eines wenigstens teilweise von dem Host-Computer (300) gesteuerten Fernsehprogrammes mit dem Host-Computer (300) in Verbindung steht,
- einem Softwareprogramm in dem Host-Computer (300), um das Fernsehprogramm wenigstens teilweise mittels Steuerdaten zu steuern, die von dem Host-Computer (300) ausgegeben werden, der wenigstens teilweise durch von dem Endbenutzergerät (100) empfangenen Daten gesteuert wird, so daß das Endbenutzergerät (100) wenigstens teilweise das Fernsehprogramm steuert,
- wenigstens einem Fernsehgerät (700) zum Empfangen und Wiedergeben des Fernsehprogrammes, und
- uni-direktionalen Kommunikationsverbindungen zwischen der Fernsehsendestation (100) und dem wenigstens einen Fernsehgerät (700), um das Fernsehprogramm dem wenigstens einen Fernsehgerät (700) unmittelbar zuzuführen,
gekennzeichnet durch
- ein Softwareprogramm in dem Endbenutzergerät (100), das ein Menü, das dem Endbenutzer Wahlmöglichkeiten zur Steuerung des Betriebs des Endbenutzergerätes (100) gibt, oder ein dem aktuellen Fernsehprogramm entsprechendes, von dem Host-Computer (300) über die bi-direktionale Datenkommunikationsverbindung (250) heruntergeladenes Softwareprogramm umfaßt.

2. Das System nach Anspruch 1, dadurch gekennzeichnet, daß das Endbenutzergerät (100) wenigstens einen Video-Analog-Digital-Konverter (149) und wenigstens einen Videoeingangsanschluß (145) umfaßt, der Daten von einer externen Videokamera empfängt.

3. Das System nach Anspruch 1 oder 2, dadurch gekennzeichnet, daß
das Endbenutzergerät (100) einen Lesespeicher (179) aufweist, der ein Betriebssystem umfaßt, das ausgelegt ist, um wenigstens Hardware- und Software-Tests durchzuführen und das Endbenutzergerät (100) zur Kommunikation mit dem Host-Computer (300) zu initialisieren.

4. Das System nach einem der vorhergehenden Ansprüche, dadurch gekennzeichnet, daß
das Endbenutzergerät (100) mit wenigstens einem Eingangsanschluß (141) versehen ist, der ausgelegt ist, Daten an eine andere Peripherievorrichtung (141) als dem Host-Computer (300) zu senden und von dieser zu empfangen.

5. Das System nach einem der vorhergehenden Ansprüche, dadurch gekennzeichnet, daß
der Lesespeicher (179) ferner ein Daten-Kompressions/Dekompressions-Programm aufweist, um Daten von der Peripherievorrichtung (141) und/oder von dem Host-Computer (300) zu senden und zu empfangen.

6. Das System nach einem der vorhergehenden Ansprüche, dadurch gekennzeichnet, daß
das Endbenutzergerät (100) zur Sprachkommunikation über das Telefonleitungsnetzwerk (250) eine Telefoneinrichtung (169) aufweist.

7. Das System nach einem der vorhergehenden Ansprüche, dadurch gekennzeichnet, daß
das Endbenutzergerät (100) zum Empfangen von Text-, Graphik-, Video- und Audiodaten oder Programmen von dem Host-Computer (300) Datenempfangseinrichtungen aufweist.

8. Das System nach einem der vorhergehenden Ansprüche, dadurch gekennzeichnet, daß
das Endbenutzergerät (100) eine Benutzerschnittstelle (103) mit Datenausgabeeinrichtungen zur Ausgabe von Text-, Graphik-, Video- und Audiodaten aufweist.

9. Das System nach einem der vorhergehenden Ansprüche, dadurch gekennzeichnet, daß
die Benutzerschnittstelle (103) zur Eingabe alphanumerischer Daten, graphischer Daten, xy-Koordinatendaten und/oder direktionaler Daten (105, 113, 115) eine Dateneingabeeinrichtung aufweist.

10. Das System nach einem der vorhergehenden Ansprüche, dadurch gekennzeichnet, daß
das Endbenutzergerät (100) zum Speichern manuell eingegebener Daten und/oder von einem peripheren Eingang (141) empfangener Daten einen Schreib/Lese-Speicherraum (179) aufweist.

11. Das System nach einem der vorhergehenden Ansprüche, dadurch gekennzeichnet, daß
das Endbenutzergerät (100) zum Speichern von Daten und/oder wenigstens eines von dem Host-Computer (300) empfangenen Softwareprogramms einen Schreib/Lese-Speicherraum (179) aufweist.

12. Das System nach einem der vorhergehenden Ansprüche, dadurch gekennzeichnet, daß
der wenigstens eine Eingangsanschluß (141) des Endbenutzergerätes (100) ausgelegt ist, um zum Empfangen von Fernsehstatusinformationen mit dem Fernsehgerät (700) des Endbenutzers verbunden zu werden.

13. Das System nach einem der vorhergehenden Ansprüche, dadurch gekennzeichnet, daß
das Endbenutzergerät (100) für Bild- und/oder Tonübertragungen von dem Host-Computer (300) wenigstens einen Videoausgang (161) und wenigstens einen Audioausgang (157) umfaßt.

14. Das System nach einem der vorhergehenden Ansprüche, dadurch gekennzeichnet, daß
der Videoausgang (161) zur Wiedergabe von mit dem Endbenutzergerät (100) empfangener Daten mit dem Videoeingang des Fernsehgerätes (700) des Endbenutzers verbunden ist.

15. Das System nach einem der vorhergehenden Ansprüche, dadurch gekennzeichnet, daß
das Endbenutzergerät (100) eine Identifikationseinrichtung (165) aufweist, die einen eindeutigen Identifikationscode eines vordefinierten Endbenutzers zu dem Host-Computer (300) überträgt.

16. Das System nach einem der vorhergehenden Ansprüche, dadurch gekennzeichnet, daß
die Identifikationseinrichtung (165) ein Magnetstreifenkartenlesegerät oder ein Chipkartenlesegerät umfaßt.

17. Das System nach einem der vorhergehenden Ansprüche, dadurch gekennzeichnet, daß
die Identifikationseinrichtung (165) ein einen eindeutigen Identifikationscode enthaltender Lesespeicher an der Stelle ist, wo der Lesespeicher in dem Endbenutzergerät untergebracht ist.

18. Das System nach einem der vorhergehenden Ansprüche, dadurch gekennzeichnet, daß
die den Host-Computer (300) mit dem Endbenutzergerät (100) verbindende Einrichtung über ein Telefonleitungsnetzwerk (250) verbundene Modems umfaßt, die sowohl in dem Endbenutzergerät (100) als auch dem Host-Computer (300) untergebracht sind.

19. Das Verfahren nach einem der vorhergehenden Ansprüche, dadurch gekennzeichnet, daß
die Modems bei einer Datenübertragungsrate im Bereich von 2400 Baud arbeiten.

20. Das System nach einem der vorhergehenden Ansprüche, dadurch gekennzeichnet, daß
der Host-Computer (300) Einrichtungen zum Senden von Text-, Graphik-, Video- und Audiodaten zu dem Endbenutzergerät (100) aufweist.

21. Das System nach einem der vorhergehenden Ansprüche, dadurch gekennzeichnet, daß
der Host-Computer (300) mit einer Datenverarbeitungseinrichtung (303) versehen ist, um simultan und separat mit einer Vielzahl von Endbenutzergeräten (100) zu kommunizieren.

22. Das System nach einem der vorhergehenden Ansprüche, dadurch gekennzeichnet, daß
der Host-Computer (300) mit einem externen Netzwerk (305) verbunden ist, um Daten an externe Knoten zu senden und von diesen zu empfangen.

23. Das System nach einem der vorhergehenden Ansprüche, dadurch gekennzeichnet, daß
der Host-Computer (300) Einrichtungen aufweist, um Informationen in seinem Speicher zu speichern, auf die von dem Endbenutzergerät (100) zugegriffen werden kann.

24. Das System nach einem der vorhergehenden Ansprüche, dadurch gekennzeichnet, daß
der Host-Computer (300) Einrichtungen aufweist, um wenigstens zwei Endbenutzergeräte (100) zur Kommunikations miteinander zu verbinden.

25. Ein Verfahren zur interaktiven Kommunikation zwischen einem Endbenutzergerät (100) und einem Host-Computer (300) in dem System des Anspruchs 1, mit den folgenden Schritten:
- das Endbenutzergerät (100) wird initialisiert und Kommunikation zwischen dem Endbenutzergerät (100) mit dem Host-Computer (300) wird über eine bi-direktionale Datenkommunikationsverbindung (250) versucht aufzubauen,
- beim Aufbau einer Komunikation wird ein Softwareprogramm in dem Endbenutzergerät (100) ausgeführt, um Daten zu dem Host-Computer (300) zu senden,
- von einem Endbenutzer in Antwort auf das Softwareprogramm in das Endbenutzergerät (100) eingegebene Daten werden von dem Endbenutzergerät (100) verarbeitet,
- Ausgabedaten des Endbenutzergerätes (100) werden zu dem Host-Computer (300) übertragen,
- von dem Endbenutzergerät (100) durch den Host-Computer (300) empfangene Daten werden von einem Softwareprogramm in dem Host-Computer (300) berücksichtigt,
- das Softwareprogramm in dem Host-Computer (300) kontrolliert Ausgabeoperationen des Host-Computers (300),
- das Softwareprogramm in dem Host-Computer (300) kontrolliert wenigstens teilweise ein von der Fernsehsendestation (500) übertragenes Fernsehprogramm,
- das Softwareprogramm in dem Host-Computer (300) umfaßt wenigstens ein Softwareprogramm, um zu ermöglichen, daß das wenigstens eine Endbenutzergerät (100) wenigstens teilweise das von der Fernsehsendestation (500) übertragene Fernsehprogramm steuert, und
- das Fernsehprogramm von der Fernsehsendestation (500) über uni-direktionale Kommunikationsverbindungen unmittelbar zu wenigstens einem Fernsehgerät (700) übertragen wird,
gekennzeichnet durch
- Herunterladen eines Softwareprogramms von dem Host-Computer (300) in das Endbenutzergerät (100) über die bi-direktionale Datenkommunikationsverbindung (250), das ein Menü, das dem Endbenutzer Wahlmöglichkeiten zum Steuern des Betriebs des Endbenutzergerätes (100) bietet, oder ein dem aktuellen Fernsehprogramm entsprechendes Softwareprogramm umfaßt.

26. Das Verfahren nach Anspruch 25, bei dem
Daten von einer externen Videokamera über wenigstens einen Videoeingangsanschluß (145) von dem Endbenutzergerät (100) empfangen und verarbeitet werden, um zu dem Host-Computer (300) übertragen zu werden.

27. Das Verfahren nach Anspruch 25 oder 26, bei dem
das heruntergeladene Softwareprogramm in einem Schreib/Lese-Speicher (179) in dem Endbenutzergerät (100) gespeichert wird.

28. Das Verfahren nach einem der Ansprüche 25 bis 27, bei dem
die Datenübertragung in Antwort auf die Dateneingabe veranlaßt, daß ein weiteres Softwareprogramm zu dem Endbenutzergerät (100) heruntergeladen wird.

29. Das Verfahren nach einem der Ansprüche 25 bis 28, bei dem
das heruntergeladene weitere Softwareprogramm innerhalb des Schreib/Lese-Speichers (179) in einem leeren Speicherbereich und/oder zuvor heruntergeladene Software überschreibend gespeichert wird.

30. Das Verfahren nach einem der Ansprüche 25 bis 29, bei dem
das heruntergeladene Softwareprogramm von einem von dem Endbenutzergerät (100) gesendeten Identifikationscode spezifiziert wird.

31. Das Verfahren nach einem der Ansprüche 25 bis 30, bei dem
der Identifikationscode auch weitere Softwareprogramme spezifizieren kann, die zu dem Endbenutzergerät (100) heruntergeladen werden sollen.

32. Das Verfahren nach einem der Ansprüche 25 bis 31, bei dem
das Endbenutzergerät (100) ein Kommunikationsprotokoll aufweist, das in einem einen Kernel-Monitor aufweisenden Lesespeicher (179) gespeichert ist.

33. Das Verfahren nach einem der Ansprüche 25 bis 32, bei dem
das heruntergeladene Softwareprogramm auf die an dem Endbenutzergerät (100) eingegebenen Daten antwortet, indem Daten zu dem Host-Computer (300) übertragen werden.

34. Das Verfahren nach einem der Ansprüche 25 bis 33, bei dem
der Host-Computer (300) in Antwort auf von dem Endbenutzergerät (100) empfangene Daten Daten zu der Fernsehsendestation (500) sendet.

35. Das Verfahren nach einem der Ansprüche 25 bis 34, bei dem
das übertragene Fernsehprogramm der Fernsehsendestation (500) in Antwort auf von dem Host-Computer (300) empfangene Daten geändert wird.

## Revendications

1. Système de communications interactif comprenant :
- une liaison de transmission de données bidirectionnelle (250) entre un ordinateur principal (300) et au moins un dispositif d'utilisateur final (100),
- une station d'émission de télévision (500) en communication avec ledit ordinateur principal (300) pour la transmission d'une émission télévisée au moins partiellement commandée par ledit ordinateur principal (300),
- un programme de logiciel dans ledit ordinateur principal (300) pour commander au moins partiellement ledit programme d'émission de télévision par la commande des données émises par ledit ordinateur principal (300) au moins partiellement commandé par des données reçues dudit dispositif d'utilisateur final (100) de telle façon que ledit dispositif d'utilisateur final (100) commande au moins partiellement ladite émission télévisée,
- au moins un téléviseur (700) conçu pour recevoir et afficher ladite émission télévisée, et
- des liaisons de transmission unidirectionnelles entre ladite station d'émission de télévision (500) et ledit au moins un téléviseur (700) pour transmettre directement ladite émission télévisée audit au moins un téléviseur (700),
caractérisé par
- un programme de logiciel dans ledit dispositif d'utilisateur final (100) comprenant un menu offrant à l'utilisateur des options pour la commande du fonctionnement du dispositif d'utilisateur final (100) ou un programme de logiciel correspondant à l'émission télévisée actuelle téléchargé à partir dudit ordinateur principal (300) par l'intermédiaire de ladite liaison de transmission de données bidirectionnelle (250).

2. Système selon la revendication 1,
caractérisé en ce que
ledit dispositif d'utilisateur final (100) comprend au moins un convertisseur vidéo analogique à numérique (149) et au moins un port d'entrée vidéo (145) qui reçoivent des données d'une caméra vidéo externe.

3. Système selon la revendication 1 ou 2,
caractérisé en ce que
ledit dispositif d'utilisateur final (100) possède une mémoire morte (179) comprenant un système d'exploitation qui est adapté pour effectuer au moins des tests complets de matériel et de logiciel et pour initialiser le dispositif d'utilisateur final (100) pour des communications avec ledit ordinateur principal (300).

4. Système selon l'une quelconque des revendications précédentes,
caractérisé en ce que
ledit dispositif d'utilisateur final (100) est équipé au moins d'un port d'entrée (141) conçu pour envoyer et recevoir des données à et d'un périphérique (141) autre que ledit ordinateur principal (300).

5. Système selon l'une quelconque des revendications précédentes,
caractérisé en ce que
ladite mémoire morte (179) comprend de plus un programme de compression / décompression de données pour envoyer et recevoir des données à partir dudit périphérique (141) et / ou à partir dudit ordinateur principal (300).

6. Système selon l'une quelconque des revendications précédentes,
caractérisé en ce que
ledit dispositif d'utilisateur final (100) comprend un moyen de téléphone (169) pour des communications vocales par ledit réseau téléphonique (250).

7. Système selon l'une quelconque des revendications précédentes,
caractérisé en ce que
ledit dispositif d'utilisateur final (100) comprend un moyen de réception de données pour recevoir des données de texte, graphiques, vidéo et sonores ou des programmes provenant dudit ordinateur principal (300).

8. Système selon l'une quelconque des revendications précédentes,
caractérisé en ce que
ledit dispositif d'utilisateur final (100) possède un moyen d'interface d'utilisateur (103) comprenant un moyen de sortie de données pour émettre des données de texte, graphiques, vidéo et sonores.

9. Système selon l'une quelconque des revendications précédentes,
caractérisé en ce que
ladite interface d'utilisateur (103) comprend un moyen d'entrée de données pour entrer des données alphanumériques, graphiques, de coordonnées cartésiennes et / ou directionnelles (105, 113, 115).

10. Système selon l'une quelconque des revendications précédentes,
caractérisé en ce que
ledit dispositif d'utilisateur final (100) possède un espace mémoire de lecture / d'écriture (179) pour enregistrer des données entrées manuellement et / ou reçues d'une entrée de périphérique (141).

11. Système selon l'une quelconque des revendications précédentes,
caractérisé en ce que
ledit dispositif d'utilisateur final (100) possède un espace mémoire de lecture / d'écriture (179) pour enregistrer des données et / ou au moins un programme de logiciel reçus dudit ordinateur principal (300).

12. Système selon l'une quelconque des revendications précédentes,
caractérisé en ce que
ledit au moins un port d'entrée (141) du dispositif d'utilisateur final est conçu pour être relié au téléviseur (700) d'un utilisateur final pour recevoir des informations d'état de télévision.

13. Système selon l'une quelconque des revendications précédentes,
caractérisé en ce que
ledit dispositif d'utilisateur final (100) comprend au moins une sortie vidéo (161) et au moins une sortie audio (157) pour des transmissions d'image et / ou de sons à partir dudit ordinateur principal (300).

14. Système selon l'une quelconque des revendications précédentes,
caractérisé en ce que
ladite sortie vidéo (161) est reliée à l'entrée vidéo dudit téléviseur (700) d'utilisateur final pour afficher des données reçues par ledit dispositif d'utilisateur final (100).

15. Système selon l'une quelconque des revendications précédentes,
caractérisé en ce que
ledit dispositif d'utilisateur final (100) possède un moyen d'identification (165) qui transmet un code d'identification unique d'un utilisateur final prédéfini à l'ordinateur principal (300).

16. Système selon l'une quelconque des revendications précédentes,
caractérisé en ce que
ledit moyen d'identification (165) comprend un lecteur de cartes à bande magnétique ou un lecteur de carte à mémoire.

17. Système selon l'une quelconque des revendications précédentes,
caractérisé en ce que
ledit moyen d'identification (165) est une mémoire morte contenant un code d'identification unique, la mémoire morte étant logée dans le dispositif d'utilisateur final.

18. Système selon l'une quelconque des revendications précédentes,
caractérisé en ce que
ledit moyen reliant ledit ordinateur principal (300) auxdits dispositifs d'utilisateur comprend des modems logés dans ledit dispositif d'utilisateur final (100) et dans ledit ordinateur principal (300) reliés par un réseau téléphonique (250).

19. Système selon l'une quelconque des revendications précédentes,
caractérisé en ce que
lesdits modems fonctionnent à une cadence de transmission de données de l'ordre de 2400 bauds.

20. Système selon l'une quelconque des revendications précédentes,
caractérisé en ce que
ledit ordinateur principal (300) possède un moyen pour transmettre des données de texte, graphiques, vidéo et sonores audit dispositif d'utilisateur final (100).

21. Système selon l'une quelconque des revendications précédentes,
caractérisé en ce que
ledit ordinateur principal (300) est équipé d'un matériel de manipulation de données (303) pour communiquer simultanément et séparément avec une pluralité de dispositifs d'utilisateur final (100).

22. Système selon l'une quelconque des revendications précédentes,
caractérisé en ce que
ledit ordinateur principal (300) est relié à un réseau externe (305) permettant audit ordinateur principal (300) d'envoyer et de recevoir des données à des et de noeuds externes.

23. Système selon l'une quelconque des revendications précédentes,
caractérisé en ce que
ledit ordinateur principal (300) possède un moyen pour enregistrer des informations dans sa mémoire accessible à partir dudit dispositif d'utilisateur final (100).

24. Système selon l'une quelconque des revendications précédentes,
caractérisé en ce que
ledit ordinateur principal (300) possède un moyen pour relier entre eux au moins deux dispositifs d'utilisateur final (100) à des fins de communication.

25. Procédé pour réaliser des communications interactives entre un dispositif d'utilisateur final (100) et un ordinateur principal (300) dans le système de la revendication 1, le procédé comprenant les opérations suivantes :
- ledit dispositif d'utilisateur final (100) est initialisé et la communication entre ledit dispositif d'utilisateur final et ledit ordinateur principal (300) est essayée par l'intermédiaire d'une liaison de transmission de données bidirectionnelle (250),
- lorsque la communication est établie, on exécute un programme de logiciel dans ledit dispositif d'utilisateur final (100) pour envoyer des données audit ordinateur principal (300),
- des données entrées par un utilisateur dans ledit dispositif d'utilisateur final (100) en réponse au programme de logiciel sont traitées par ledit dispositif d'utilisateur final (100),
- des données de sortie dudit dispositif d'utilisateur final (100) sont transmises audit ordinateur principal (300),
- des données reçues par ledit ordinateur principal (300) provenant dudit dispositif d'utilisateur final (100) sont prises en considération par un programme de logiciel dans ledit ordinateur principal (300),
- ledit programme de logiciel dans ledit ordinateur principal (300) commande l'activité de sortie dudit ordinateur principal (300),
- ledit programme de logiciel dans ledit ordinateur principal (300) commande au moins partiellement un programme d'émission de télévision transmis par ladite station d'émission de télévision (500),
- ledit programme de logiciel dans ledit ordinateur principal (300) comprend au moins un programme de logiciel pour permettre audit au moins un dispositif d'utilisateur final (100) de commander au moins partiellement ladite émission télévisée transmise par ladite station d'émission de télévision (500), et
- ladite émission télévisée est directement transmise à au moins un téléviseur (700) par ladite station d'émission de télévision (500) par l'intermédiaire de liaisons de transmission unidirectionnelles,
le procédé se caractérisant par
- le téléchargement d'un programme de logiciel de l'ordinateur principal (300) dans le dispositif d'utilisateur final (100) par l'intermédiaire de ladite liaison de transmission de données bidirectionnelle (250) comprenant un menu offrant à l'utilisateur des options pour commander le fonctionnement du dispositif d'utilisateur final (100) ou un programme de logiciel correspondant à l'émission télévisée en cours.

26. Procédé selon la revendication 25, dans lequel
des données provenant d'une caméra vidéo externe sont reçues dudit dispositif d'utilisateur final (100) par l'intermédiaire d'au moins un port d'entrée vidéo (145) et sont traitées par ledit dispositif d'utilisateur final (100) pour être transmises audit ordinateur principal (300).

27. Procédé selon la revendication 25 ou 26 dans lequel
ledit programme de logiciel téléchargé est enregistré dans la mémoire de lecture / d'écriture (179) à l'intérieur dudit dispositif d'utilisateur final (100).

28. Procédé selon l'une quelconque des revendications 25 à 27 dans lequel
ladite transmission de données en réponse à ladite entrée de données lancera le téléchargement d'un autre programme de logiciel audit dispositif d'utilisateur final (100).

29. Procédé selon l'une quelconque des revendications 25 à 28 dans lequel
ledit autre programme de logiciel téléchargé est enregistré dans la mémoire de lecture / d'écriture (179) dans un espace vide et / ou en recouvrant le logiciel précédemment téléchargé.

30. Procédé selon l'une quelconque des revendications 25 à 29 dans lequel
ledit programme de logiciel téléchargé est spécifié par un code d'identification envoyé par ledit dispositif d'utilisateur final (100).

31. Procédé selon l'une quelconque des revendications 25 à 30 dans lequel
ledit code d'identification peut également spécifier d'autres programmes de logiciel à télécharger audit dispositif d'utilisateur final (100).

32. Procédé selon l'une quelconque des revendications 25 à 31 dans lequel
ledit dispositif d'utilisateur final possède un protocole de communication enregistré dans la mémoire morte (179) comprenant un système de monitorage résident.

33. Procédé selon l'une quelconque des revendications 25 à 32 dans lequel
ledit programme de logiciel téléchargé réagit auxdites données entrées sur le dispositif d'utilisateur final (100) en transférant des données audit ordinateur principal (300).

34. Procédé selon l'une quelconque des revendications 25 à 33 dans lequel
ledit ordinateur principal (300) envoie des données à ladite station d'émission de télévision (500) en réponse à des données reçues dudit dispositif d'utilisateur final (100).

35. Procédé selon l'une quelconque des revendications 25 à 34 dans lequel
ledit programme transmis de ladite station d'émission de télévision (500) est modifié en réponse aux données reçues par ledit ordinateur principal (300).
